# EUROPEAN PATENT APPLICATION

(11) **EP 1 980 314 A1**
(43) Date of publication of application: **15.10.2008**
(21) Application number: 07706840.1
(22) Date of filing: 16.01.2007
(51) Int. Cl.: B01D 71/02, B01D 69/10, B01D 69/12

(54) **PROCESS FOR PRODUCTION OF ZEOLITE SEPARATION MEMBRANE**

(30) Priority: 16.01.2006 JP 2006007722
(71) Applicant: Mitsubishi Chemical Corporation, Minato-ku Tokyo 108-0014 (JP)
(72) Inventor: MIZUNO, Takehito, Tsuchiura-shi Ibaraki 300-0812 (JP)
(74) Representative: HOFFMANN EITLE
(86) International application number: PCT/JP2007/050513
(87) International publication number: WO 2007/081024

(57) **Abstract**

The invention provides a process for production of a zeolite separation membrane having a porous support composed mainly of alumina and a zeolite layer formed on the surface of, and inside the pores of, the porous support, the process comprising: a crude product-forming step in which: a silica-attached support in which silica is attached to the surface of, and inside the pores of, the porous support is contacted with a reaction solution containing silicon and aluminum, and the reaction solution is heated to form a crude product of the zeolite separation membrane, and a crude product-separating step in which the crude product of the zeolite separation membrane is separated from the reaction solution to afford the zeolite separation membrane. This process for production of a zeolite separation membrane makes it possible to produce a zeolite separation membrane that can accomplish satisfactory separation of alcohol and water even when the water content relative to alcohol is low.

## Description

### Technical Field

The present invention relates to a process for production of a zeolite separation membrane.

### Background Art

A zeolite separation membrane having a porous support and a zeolite layer (zeolite membarane) formed on its surface and inside its pores is widely used as a means of separation of organic solvent (particularly alcohol) and water. In the production of a zeolite separation membrane, in order to form a zeolite layer on the porous support, it is common to employ hydrothermal synthesis, wherein a porous support is immersed in a reaction solution containing zeolite raw material and the reaction solution is heated to form a zeolite layer.

As an example of a conventional process for production of a zeolite separation membrane with relatively high separation performance, there is known a process in which: a seed crystal slurry containing zeolite seed crystals (where the mode of the particle size frequency distribution is 1 nm to 1 µm, and 99 vol% have particle sizes of no greater than 5 µm) is contacted with a porous support to attach the seed crystals onto the porous support, and then the seed crystal-attached porous support is immersed in a reaction solution containing zeolite raw material and the hydrothermal synthesis is performed (see Patent document 1). Also known is a process in which: a reaction solution containing zeolite raw material is aged at room temperature for a prescribed time, and then a porous support having zeolite seed crystals attached thereto is immersed in the reaction solution and the hydrothermal synthesis is performed at a temperature of 80°C or higher (see Patent documents 2 and 3).
Patent document 1: Japanese Patent Application Laid-Open No. 2004-82008
Patent document 2: Japanese Patent Application Laid-Open No. HEI 8-257301
Patent document 3: Japanese Patent Application Laid-Open No. 2000-42387

### Disclosure of the Invention

### Problem to be Solved by the Invention

Zeolite separation membranes obtained by the conventional processes (for example, processes described in Patent documents 1 to 3), however, usually have separation factors of less than 2000 when the water content relative to alcohol is low (for example, alcohol/water (weight ratio) = 99/1), and therefore they have not always been capable of satisfactorily separating alcohol and water. As a result, it has not been easy to produce high purity alcohols required in fields such as semiconductor manufacturing.

It is therefore an object of the present invention to provide a process for production of a zeolite separation membrane that can accomplish satisfactory separation of alcohol and water even when the water content relative to alcohol is low.

### Means for Solving the Problem

As a result of much diligent research directed toward achieving the object stated above, the present inventors have unexpectedly found that a zeolite separation membrane with sufficiently high separation performance can be obtained by attaching silica to the surface of, and inside the pores of, a porous support composed mainly of alumina during hydrothermal synthesis, and the invention has been completed based on this finding.

Specifically, the present invention is a process for production of a zeolite separation membrane having a porous support composed mainly of alumina and a zeolite layer formed on the surface of, and inside the pores of, the porous support, the process comprising:
a crude product-forming step in which: a silica-attached support in which silica is attached to the surface of, and inside the pores of, the porous support is contacted with a reaction solution containing silicon and aluminum, and the reaction solution is heated to form a crude product of the zeolite separation membrane, and
a crude product-separating step in which the crude product of the zeolite separation membrane is separated from the reaction solution to afford the zeolite separation membrane.

The production process described above makes it possible to obtain a zeolite separation membrane with sufficiently minimized defects in the zeolite layer and sufficiently high separation performance. This is presumably due to the following reasons.

In a conventional production process, if a zeolite separation membrane is produced using a porous support composed mainly of alumina, the alumina elutes from the porous support into the reaction solution during the hydrothermal synthesis, thus altering the proportion of silicon and aluminum in the reaction solution near the surface of, and in the pores of, the porous support. As a result, a zeolite layer with a desired compositional ratio (molar ratio of silica and alumina) can no longer be formed. According to the production process of the invention, however, the attached silica, as well as the alumina, elutes from the silica-attached support into the reaction solution during the hydrothermal synthesis, thus maintaining a relatively constant proportion of silicon and aluminum in the reaction solution near the surface of, and in the pores of, the porous support. Consequently, a zeolite layer with a desired compositional ratio (molar ratio of silica and alumina) is more easily formed, and a zeolite layer with sufficiently high crystallinity can be formed.

The zeolite separation membrane obtained by the production process described above is a zeolite separation membrane with sufficiently minimized defects in the zeolite layer and sufficiently high separation performance, and therefore it is capable of satisfactorily separating alcohol and water even when the water content relative to alcohol is low (for example, alcohol/water (weight ratio) = 99/1).

The crude product-forming step is preferably preceded by a seed crystal-attaching step in which zeolite seed crystals are attached to the surface of, and inside the pores of, the porous support. The seed crystal-attaching step will allow growth of zeolite crystals primarily around the seed crystals on the porous support during the crude product-forming step. As a result, a zeolite layer with high homogeneity and high resistance to peeling will be formed, thus further increasing the separation performance of the resultant zeolite separation membrane, compared to the case where a seed crystal-attaching step is not carried out.

The porous support to which the zeolite seed crystals are attached is preferably a silica-attached support. If zeolite seed crystals are attached to a porous support to which silica has not been attached, the attachment of silica will occur either during or after attachment of the zeolite seed crystals. This will result in attachment of silica to the zeolite seed crystals that have attached onto the porous support, tending to create an increased number of defects in the formed zeolite layer, compared to the case where the zeolite seed crystals are attached to a silica-attached support.

The silica-attached support to be used in the production process described above is preferably a support obtained by contacting the porous support with a liquid which contains colloidal silica and then drying the porous support. Use of such a silica-attached support will make it possible to obtain a zeolite separation membrane which has a zeolite layer with high crystallinity and which exhibits high separation performance, compared to use of a different kind of silica-attached support. This is presumably due to the following reasons. In a silica-attached support obtained in the manner described above, the high dispersibility of colloidal silica in liquid will allow the silica to attach uniformly to the entire region on the surface of, and inside the pores of, the porous support. During hydrothermal synthesis, therefore, the proportion of silicon and aluminum in the reaction solution will remain relatively constant across the entire region near the surface of, and inside the pores of, the porous support, thus facilitating formation of a zeolite layer with a desired compositional ratio (molar ratio of silica and alumina). The silica attached to the porous support does not need to retain all or part of the form of colloidal silica before attachment.

### Effects of the Invention

The present invention provides a process for production of a zeolite separation membrane that can accomplish satisfactory separation of alcohol and water even when the water content relative to alcohol is low.

### Brief Description of the Drawings

Fig. 1 is a view showing a scanning electron microscope photograph of a cross-section of a silica-attached support.
Fig. 2 is a schematic diagram of a pervaporation (PV) test apparatus.

### Explanation of Reference Numerals

10: Pervaporation test apparatus; 11: container; 12: conduit; 13: stirrer; 14: zeolite separation membrane; 15: conduit; 16: liquid nitrogen trap; 17: vacuum pump; 18: vacuum gauge.

### Best Modes for Carrying Out the Invention

Preferred embodiments of the present invention will now be explained.

### [Zeolite separation membrane production process]

The process for production of a zeolite separation membrane according to the invention is a process for production of a zeolite separation membrane having a porous support composed mainly of alumina and a zeolite layer formed on the surface of, and inside the pores of, the porous support, and the process comprises at least a crude product-forming step and crude product-separating step as hereinafter described.

The phrase "composed mainly of alumina" as used herein means that the alumina content of the porous support is at least 90% with respect to the total weight of the porous support. The alumina may be α-alumina, β-alumina or γ-alumina, with α-alumina being preferred from the viewpoint of physical and chemical stability. As components other than alumina that may be contained in the porous support, there may be mentioned mullite, silica, titania, zirconia, stainless steel, nickel and the like.

### (Crude product-forming step)

The crude product-forming step is a step in which: a silica-attached support in which silica is attached to the surface of, and inside the pores of, the porous support is contacted with a reaction solution containing silicon and aluminum, and the reaction solution is heated to form a crude product of the zeolite separation membrane.

The reaction solution to be used for the crude product-forming step is a liquid (or gel) containing zeolite raw material, and contains at least silicon and aluminum. The molar ratio of silicon and aluminum in the reaction solution may be appropriately set depending on the composition of the zeolite to be synthesized.

The reaction solution may be prepared by adding a mixture of silica source and alumina source to a solvent (such as water) and stirring the resultant mixture. As silica sources there may be mentioned alkali metal silicates such as sodium silicate, water glass and potassium silicate, as well as silica powder, silicic acid, colloidal silica, acid clay, kaolin, silicon alkoxides (aluminum isopropoxide, etc.) and the like. As alumina sources there may be mentioned aluminum salts such as aluminum hydroxide, sodium aluminate, aluminum sulfate, aluminum nitrate and aluminum chloride, as well as alumina powder, colloidal alumina and the like.

The total amount of silica source and alumina source used to prepare the reaction solution is preferably 50% to 99.5% by weight and more preferably 60% to 90% by weight with respect to the total weight of the reaction solution to be prepared. If the total content is less than 50% by weight, growth of the zeolite crystals will tend to be slow compared to the case where the total content is 50% to 99.5% by weight. On the other hand, if the total content is more than 99.5% by weight, formation of a homogeneous zeolite layer will be difficult to occur compared to the case where the total content is 50% to 99.5% by weight. If the total content is 60% to 90% by weight, the rate of zeolite layer formation will be notably increased and the homogeneity of the formed zeolite layer will be particularly high.

The reaction solution may also contain alkali metal or alkaline earth metal. The reaction solution that also contains alkali metal or alkaline earth metal may be prepared by adding alkali metal source or alkaline earth metal source to a liquid that contains silicon and aluminum and stirring the resultant mixture. As alkali metal sources there may be mentioned sodium chloride, potassium chloride and the like. As alkaline earth metal sources there may be mentioned calcium chloride, magnesium chloride and the like. An alkali metal silicate used as a silica source can also serve as an alkali metal source.

The reaction solution may further contain an additive such as a crystallization promoter. As crystallization promoters there may be mentioned tetrapropylammonium bromide, tetrabutylammonium bromide, tetrapropyl hydroxide, tetramethyl hydroxide, tetraethyl hydroxide and the like.

The silica-attached support to be used for the crude product-forming step may be fabricated by attaching silica to a porous support. The attachment of silica onto the porous support is preferably accomplished by contacting the porous support with a silica slurry (silica-containing liquid) and then drying the porous support. As methods for contacting the porous support with a silica slurry, there may be mentioned: impregnation (method wherein the porous support is impregnated with the silica slurry), spin coating (method wherein the silica slurry is dropped and spin-coated onto the porous support), spray coating (method wherein the silica slurry is sprayed onto the porous support), application, and the like.

As for the silica contained in the silica slurry, colloidal silica is preferred in that its dispersibility in liquid is high. If a colloidal silica slurry (colloidal silica-containing liquid) is used, it is possible to obtain a silica-attached support in which silica is uniformly attached to the entire region on the surface and inside the pores. The solvent for the silica slurry is preferably water or a water-containing lower alcohol. The length of time for which the porous support is kept contacted with the silica slurry is preferably 1 minute or longer. If the contact time is less than 1 minute, satisfactory attachment of silica onto the porous support will be difficult to occur compared to the case where the contact time is 1 minute or longer.

The attachment of silica onto the porous support may also be accomplished without a silica slurry. Specifically, it may be accomplished by chemical vapor deposition, thermal spraying, sintering, plating or the like.

The mean pore size of the porous support is preferably 0.1 to 20 µm and more preferably 0.1 to 5 µm. If the mean pore size is less than 0.1 µm, attachment of silica and zeolite seed crystals inside the pores of the porous support will be difficult to occur compared to the case where the mean pore size is 0.1 to 20 µm. On the other hand, if the mean pore size is greater than 20 µm, an increased number of defects (grain boundaries, cracks, pinholes and the like) will tend to be generated in the zeolite layer to be formed, compared to the case where the mean pore size is 0.1 to 20 µm. If the mean pore size is 0.1 to 5 µm, attachment of silica and zeolite seed crystals inside the pores of the porous support will be particularly easy to occur and the number of defects generated in the formed zeolite layer will be notably reduced.

The porosity of the porous support is preferably 5% to 50% and more preferably 30% to 50%. A porosity of less than 5% will tend to lower the gas permeation rate and to reduce the permeation flux, compared to a porosity of 5% to 50%. On the other hand, a porosity of greater than 50% will tend to reduce the self-supporting property (mechanical strength) of the porous support, compared to a porosity of 5% to 50%. If the porosity is 30% to 50%, the permeation flux and mechanical strength of the resultant zeolite separation membrane will be particularly high.

The shape of the porous support may, for example, be tubular, cylindrical, hollow fibrous, plate-like, honeycomb-shaped or pelleted. The shape may be appropriately selected depending on the purpose for which the zeolite separation membrane is to be used. For example, when the zeolite separation membrane is to be used for separation of organic solvent and water, it is preferably tubular, cylindrical or hollow fibrous.

There are no particular restrictions on the size of the porous support, but if the shape is tubular, for example, a length of 2 to 200 cm, an inner diameter of 0.5 to 2 cm and a thickness of 0.5 to 4 mm is practical.

The contact between the silica-attached support and reaction solution may be accomplished by, for example, immersing the silica-attached support in the reaction solution.

In the crude product-forming step, the reaction solution is heated to raise its temperature to a prescribed temperature, during which the silica-attached support and reaction solution are in contact. The prescribed temperature as referred to here is a temperature higher than 40°C, and may be appropriately set depending on the type of zeolite to be synthesized and the composition, properties, etc. of the reaction solution. For example, when the zeolite to be synthesized is type A zeolite, the temperature may be 70°C to 110°C; when it is type FAU zeolite, the temperature may be 90°C to 130°C; and when it is type MOR zeolite, the temperature may be 150°C to 190°C.

After raising the temperature of the reaction solution to the prescribed temperature, the reaction solution is preferably held at this temperature for at least 2 hours. If the reaction solution is not held at the prescribed temperature for at least 2 hours, an increased number of defects will tend to be generated in the zeolite layer to be formed, compared to the case where it is held for at least 2 hours.

The heating of the reaction solution may be accomplished by, for example, supplying a heating medium (for example, water or water vapor) to a jacket provided around a container in which the reaction solution is housed, or to a spiral tube provided inside a container in which the reaction solution is housed.

In addition to silica and alumina, the zeolite to be synthesized may further contain oxides of elements other than silicon and aluminum (for example, titanium, phosphorus, beryllium, boron, gallium, chromium, iron and germanium). Embodiments of the invention will now be explained on the assumption that the oxide is titania (oxide of titanium), but the invention may be carried out in the same manner if the oxide is not titania (nor silica nor alumina).

For synthesis of titania-containing zeolite, the reaction solution is a solution containing titanium in addition to silicon and aluminum. The reaction solution further containing titanium may be prepared by adding titanium source to a liquid that contains silicon and aluminum and stirring the resultant mixture. As titanium sources there may be mentioned titanium trichloride, dititanium trioxide, titanium tetrabromide, titanium disilicide and titanium carbide.

For synthesis of titania-containing zeolite, the silica-attached support is preferably a silica/titania-attached support in which titania as well as silica is attached to the surface of, and inside the pores of, the porous support. Use of such a silica-attached support will make it possible to obtain a zeolite separation membrane with a reduced number of defects in the zeolite layer and high separation performance, compared to use of a silica-attached support to which titania is not attached. This is presumably due to the following reasons. During hydrothermal synthesis, the attached silica and titania, as well as the alumina, elute from the silica/titania-attached support into the reaction solution, thus maintaining a relatively constant proportion of silicon, aluminum and titanium in the reaction solution near the surface of, and in the pores of, the porous support. Consequently, a zeolite layer with a desired compositional ratio (molar ratio of silica, alumina and titania) is more easily formed, and a zeolite layer with sufficiently high crystallinity can be formed.

The silica/titania-attached support may be fabricated by attaching silica and titania to a porous support. Methods for attaching titania to a porous support and preferred modes thereof are the same as in the case of attachment of silica. Specifically, the attachment of titania onto the porous support is preferably accomplished by, for example, contacting the porous support with a titania slurry (titania-containing liquid) and then drying the porous support. As for the titania contained in the titania slurry, colloidal titania is preferred in that its dispersibility in liquid is high. The attachment of silica and attachment of titania may be performed simultaneously or at different times in any desired order.

A silica-attaching step in which silica is attached to the porous support may be carried out before the crude product-forming step. Also, when using a silica/titania-attached support, a titania-attaching step in which titania is attached to the porous support may be carried out before the crude product-forming step. As mentioned above, the silica-attaching step and titania-attaching step may be carried out simultaneously or at different times in any desired order.

The silica-attached support may be an existing one (for example, a commercially available product) or a support obtained by the silica-attaching step described above. Also, the silica/titania-attached support may be an existing one (for example, a commercially available product) or a support obtained by the silica-attaching step and/or titania-attaching step described above.

### (Crude product-separating step)

The crude product-forming step is followed by a crude product-separating step in which the crude product of the zeolite separation membrane is separated from the reaction solution to afford the zeolite separation membrane.

As methods for separating the crude product of the zeolite separation membrane from the reaction solution, there may be mentioned: a method wherein the crude product is lifted from the reaction solution; a method wherein only the reaction solution is removed through an outlet provided at the bottom section of the container; a method wherein the container housing the reaction solution is moved downward without moving the crude product; and the like.

The crude product-separating step is preferably followed by a separation membrane-washing step in which the obtained zeolite separation membrane is washed. In this step, unreacted substances, zeolite particles, amorphous components and the like which have been attached to the surface of the zeolite layer are removed. If the separation membrane-washing step is carried out, the separation performance of the resultant zeolite separation membrane will be high compared to the case where it is not carried out.

As methods for washing the zeolite separation membrane, there may be mentioned: a method wherein the surface of the zeolite layer is brushed with the zeolite separation membrane contacted with water; a method wherein ultrasonic waves are applied to the surface of the zeolite layer with the zeolite separation membrane immersed in water; and the like.

The crude product-separating step is preferably followed by a separation membrane-cooling step in which the zeolite separation membrane is cooled, either simultaneously with the separation membrane-washing step or before the separation membrane-washing step. If the separation membrane-cooling step is carried out, drying of the porous support will be difficult to occur and drying and hardening of the attached substances will be suppressed, compared to the case where it is not carried out.

As methods for cooling the zeolite separation membrane, there may be mentioned: a method wherein the zeolite separation membrane is immersed in water of low temperature (for example, 10°C to 40°C); a method wherein the zeolite separation membrane is sprayed with water of low temperature (for example, 10°C to 40°C); and the like.

### (Seed crystal-attaching step)

The crude product-forming step is preferably preceded by a seed crystal-attaching step in which zeolite seed crystals (hereinafter also referred to simply as "seed crystals") are attached to the surface of, and inside the pores of, the porous support. The seed crystal-attaching step will allow growth of zeolite crystals primarily on the porous support during the crude product-forming step. As a result, a zeolite layer with high homogeneity and high resistance to peeling will be formed, thus further increasing the separation performance of the resultant zeolite separation membrane, compared to the case where a seed crystal-attaching step is not carried out. This tendency is particularly notable when the zeolite to be synthesized is type A zeolite, type FAU zeolite or type MOR zeolite.

The porous support to which the zeolite seed crystals are attached is preferably a silica-attached support. If seed crystals are attached to a porous support to which silica has not been attached, the attachment of silica will occur either during or after attachment of the seed crystals. This will result in attachment of silica to the seed crystals that have attached onto the porous support, tending to create an increased number of defects in the formed zeolite layer, compared to the case where the seed crystals are attached to a silica-attached support.

The mean particle size of the zeolite seed crystals is preferably 1 nm to 1 µm and more preferably 1 nm to 0.4 µm. If the mean particle size of the seed crystals is less than 1 nm, formation of an inhomogeneous zeolite layer having numerous microcrystals and grain boundaries will be easy to occur compared to the case where the mean particle size is 1 nm to 1 µm. On the other hand, if the mean particle size of the seed crystals is greater than 1 µm, the layer of the seed crystals attached to the porous support will be thick and growth of zeolite crystals will be difficult to occur except in the vicinity of the surface of the layer, compared to the case where the mean particle size is 1 nm to 1 µm. Also, attachment of the seed crystals inside the pores of the porous support will be difficult to occur. Peeling of the formed zeolite layer will therefore tend to occur. If the mean particle size of the seed crystals is 1 nm to 0.4 µm, the homogeneity of the formed zeolite layer will be particularly high and peeling of the zeolite layer will be particularly difficult to occur.

The zeolite seed crystals do not necessarily need to be of the same type as the zeolite to be synthesized, and a different type may be used so long as the crystal structure is similar thereto.

The attachment of the zeolite seed crystals onto the porous support may be accomplished by, for example, contacting the porous support with a seed crystal slurry (liquid containing the seed crystals) or rubbing the seed crystals directly onto the porous support.

As methods for contacting the porous support with a seed crystal slurry, there may be mentioned: impregnation (method wherein the porous support is impregnated with the seed crystal slurry), spin coating (method wherein the seed crystal slurry is dropped and spin-coated onto the porous support), spray coating (method wherein the seed crystal slurry is sprayed onto the porous support), application, filtration, and the like. The length of time for which the porous support is kept contacted with the seed crystal slurry is preferably 0.5 to 60 minutes and more preferably 1 to 10 minutes. If the contact time is less than 0.5 minute, attachment of the seed crystals will be difficult to occur compared to the case where the contact time is 0.5 to 60 minutes. On the other hand, if the contact time is more than 60 minutes, the layer of the seed crystals attached to the porous support will be thick and growth of zeolite crystals will be difficult to occur except in the vicinity of the surface of the layer, compared to the case where the contact time is 0.5 to 60 minutes. Peeling of the formed zeolite layer will therefore tend to occur. If the contact time is 1 to 10 minutes, attachment of the seed crystals to the porous support will be particularly easy to occur and peeling of the formed zeolite layer will be particularly difficult to occur.

The seed crystal slurry may be prepared by placing the zeolite seed crystals in water, a water-containing lower alcohol or the like and stirring the resultant mixture. The seed crystals to be used for preparation of the seed crystal slurry are preferably zeolite microcrystals with a mean particle size of 1 nm to 1 µm. If such microcrystals are used, settling of the seed crystals in the seed crystal slurry will be difficult to occur and the dispersion state of the seed crystals in the seed crystal slurry will be stable, compared to the case where other types of crystals are used. The concentration of seed crystals in the seed crystal slurry is preferably 0.01% to 20% by weight and more preferably 0.1% to 10% by weight. If the concentration of seed crystals is less than 0.01 % by weight, attachment of the seed crystals to the porous support will be difficult to occur compared to the case where the seed crystal concentration is 0.01% to 20% by weight. On the other hand, if the concentration of seed crystals is greater than 20% by weight, the layer of the seed crystals attached to the porous support will be thick and growth of zeolite crystals will be difficult to occur except in the vicinity of the surface of the layer, compared to the case where the concentration of seed crystals is 0.01% to 20% by weight. Peeling of the formed zeolite layer will therefore tend to occur. If the concentration of seed crystals is 0.1 % to 10% by weight, attachment of the seed crystals to the porous support will be particularly easy to occur and peeling of the formed zeolite layer will be particularly difficult to occur. The seed crystal slurry may also contain additives such as surfactants.

In the seed crystal-attaching step, the porous support and the zeolite seed crystals attached thereto are preferably dried after the seed crystals have been attached to the porous support. Drying of the porous support and seed crystals can further reinforce the attachment of the seed crystals. The drying is preferably performed at a temperature of no higher than 70°C. Drying at a temperature above 70°C will increase the rate of evaporation of the solvent and promote aggregation of the seed crystals, compared to drying at a temperature of 70°C or below. The homogeneity of attachment of the seed crystals will thus tend to be reduced. The drying is preferably a combination of room temperature drying and heated drying, because such a combination will shorten the heating time during drying.

As mentioned above, a silica-attached support is preferred as the porous support for attachment of the zeolite seed crystals. Therefore, if the silica-attaching step is carried out before the crude product-forming step, it is preferred to carry out the seed crystal-attaching step after the silica-attaching step. Also, if the titania-attaching step is carried out, it is preferred to carry out the seed crystal-attaching step after the titania-attaching step.

### [Zeolite separation membrane]

The invention also provides a zeolite separation membrane obtainable by the production process described above. The zeolite separation membrane is a zeolite separation membrane with sufficiently minimized defects (grain boundaries, cracks, pinholes, etc.) in the zeolite layer and sufficiently high separation performance, and therefore it is capable of satisfactorily separating alcohol and water even when the water content relative to alcohol is low (for example, alcohol/water (weight ratio) = 99/1). The type (composition) of the zeolite in the zeolite separation membrane obtainable by the production process of the invention is not particularly restricted, and as examples there may be mentioned: type A zeolite, type T zeolite, type MFI zeolite, type FAU zeolite and type MOR zeolite.

The separation performance of the zeolite separation membrane may be evaluated based on the separation factor. In the case of separation of ethanol and water, for example, the separation factor is the value expressed as (B1/B2)/(A1/A2) where: the concentrations of water and ethanol in the mixture prior to separation are A1% by weight and A2% by weight, respectively, and the concentrations of water and ethanol in the liquid or gas permeating the zeolite separation membrane are B1% by weight and B2% by weight, respectively. A larger separation factor can be judged to mean that the separation performance is higher.

The practical utility of the obtained zeolite separation membrane may be evaluated based on the permeation flux. The permeation flux is the amount of liquid permeating the zeolite separation membrane per unit time, and a larger permeation flux can be judged to mean that the separation is faster and the practical utility is superior.

### Examples

The present invention will now be explained in greater detail based on examples and comparative examples. However, the invention is not limited to the examples described below.

### [Example 1]

### (Production of zeolite separation membrane)

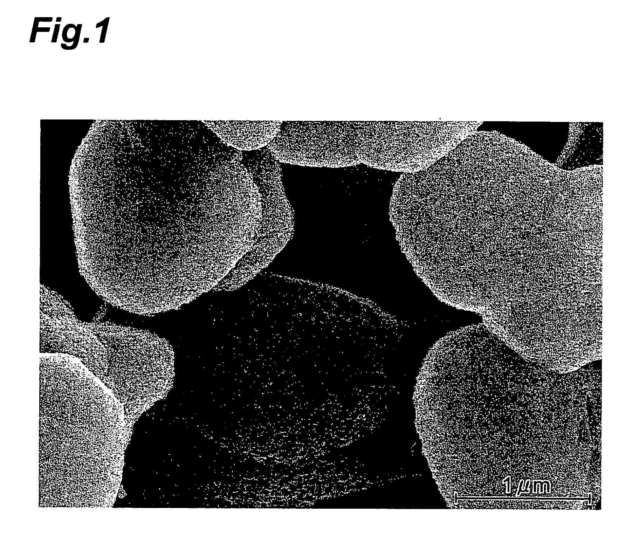

Colloidal silica (HS-40, Grace) with a mean particle size of 12 nm was placed in water and stirred to prepare a colloidal silica slurry with a concentration of 0.5% by weight. A tubular porous support made of α-alumina (mean pore size: 0.8 µm; outer diameter: 10 mm; inner diameter: 6 mm; length: 10 cm) was immersed for 3 minutes in the colloidal silica slurry, and then drawn out at a constant speed. After drying for 2 hours in a thermostatic bath at 36°C, the porous support was further dried for 16 hours in a thermostatic bath at 70°C to afford a silica-attached support. By observing a cross-section of the obtained silica-attached support with a scanning electron microscope, it was confirmed that silica had been uniformly attached to the surface of, and inside the pores of, the porous support. Fig. 1 is a view showing a scanning electron microscope photograph of the cross-section of the obtained silica-attached support.

Type A zeolite microcrystals with a mean particle size of 100 nm were placed in water and stirred to prepare a seed crystal slurry with a concentration of 0.1% by weight. The silica-attached support was immersed for 3 minutes in this seed crystal slurry, and then drawn out at a constant speed. After drying for 2 hours in a thermostatic bath at 25°C, the silica-attached support was further dried for 16 hours in a thermostatic bath at 70°C.

Sodium silicate, aluminum hydroxide and distilled water were mixed to yield a reaction solution comprising 1 part by mole of alumina (Al₂O₃), 3.5 parts by mole of silicon dioxide (SiO₂), 8 parts by mole of sodium oxide (Na₂O) and 300 parts by mole of water. The prepared reaction solution was immediately placed in a container surrounded by an outer jacket, and the silica-attached support was immersed in the reaction solution. The temperature of the reaction solution at the start of immersion (reaction) was adjusted to 0°C. Immediately after the start of immersion, the temperature of the reaction solution was raised to 77°C over a period of 15 minutes and then held at 77°C for 3 hours to form a crude product of a zeolite separation membrane. The obtained crude product was lifted from the reaction solution to afford the zeolite separation membrane. The obtained zeolite separation membrane was washed with water and then dried at 36°C for 16 hours.

### (Measurement of separation factor and permeation flux)

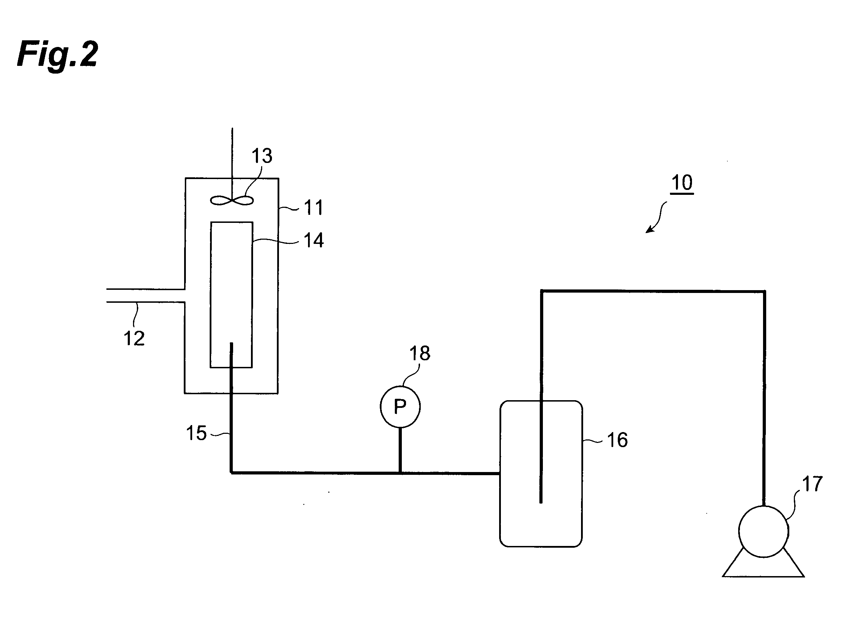

A pervaporation (PV) test apparatus shown in Fig. 2 was assembled using the obtained zeolite separation membrane. The PV test apparatus 10 has a container 11 for supply of a mixture to be separated. A conduit 12 for supply of the mixture to the container 11 is connected to the container 11, and a stirrer 13 for stirring of the mixture and a zeolite separation membrane 14 are set in the container 11. A conduit 15 is connected to an open end of the zeolite separation membrane 14, and a vacuum pump 17 is connected to the end of the conduit 15 via a liquid nitrogen trap 16. A vacuum gauge 18 is installed along the conduit 15.

An isopropyl alcohol/water mixture at 75°C (isopropyl alcohol/water (weight ratio) = 99/1) (hereinafter referred to as "liquid A") was supplied to the container 11 of the PV test apparatus 10 through the conduit 12, and the interior of the zeolite separation membrane 14 was evacuated with the vacuum pump 17 until the degree of vacuum as displayed by the vacuum gauge 18 was 0.3 kPa. The liquid that had permeated the zeolite separation membrane 14 (hereinafter referred to as "liquid B") was collected at the liquid nitrogen trap 16. The compositions of liquid A and liquid B were measured using a gas chromatograph (GC-14B, Shimadzu Corp.), and the separation factor was determined. The weight of the collected liquid B was measured and the permeation flux (Kg/m²h) was determined.

### [Comparative Example 1]

A zeolite separation membrane was produced in the same manner as in Example 1, except that: a silica-attached support was not fabricated, and a porous support to which silica had not been attached was used as the porous support immersed in the seed crystal slurry and reaction solution. The separation factor and permeation flux of the obtained zeolite separation membrane were determined in the same manner as in Example 1.

Table 1 shows the results of Example 1 and Comparative Example 1.

**[Table 1]**

| | Separation factor | Permeation flux (Kg/m²h) |
|---|---|---|
| Example 1 | 2788 | 1.877 |
| Comparative Example 1 | 1771 | 2.131 |

As shown in Table 1, the separation factor of the zeolite separation membrane obtained in Example 1 was sufficiently high compared to the zeolite separation membrane obtained in Comparative Example 1. Also, the permeation flux was sufficiently high for practical use, although it was slightly inferior to that of the zeolite separation membrane obtained in Comparative Example 1.

### [Example 2]

A zeolite separation membrane was produced in the same manner as in Example 1, except that: the seed crystal slurry was prepared using type A zeolite microcrystals with a mean particle size of 300 nm, the temperature of the reaction solution at the start of immersion was adjusted to 30°C, and after start of the immersion, the temperature of the reaction solution was held at 30°C for 50 minutes before being raised to 77°C. The separation factor and permeation flux of the obtained zeolite separation membrane were determined in the same manner as in Example 1.

### [Comparative Example 2]

A zeolite separation membrane was produced in the same manner as in Example 2, except that: a silica-attached support was not fabricated, and a porous support to which silica had not been attached was used as the porous support immersed in the seed crystal slurry and reaction solution. The separation factor and permeation flux of the obtained zeolite separation membrane were determined in the same manner as in Example 1.

Table 2 shows the results of Example 2 and Comparative Example 2.

**[Table 2]**

| | Separation factor | Permeation flux (Kg/m²h) |
|---|---|---|
| Example 2 | 2503 | 1.927 |
| Comparative Example 2 | 835 | 1.929 |

As shown in Table 2, the separation factor of the zeolite separation membrane obtained in Example 2 was notably high compared to the zeolite separation membrane obtained in Comparative Example 2. Also, the permeation flux was sufficiently high for practical use, although it was approximately equivalent to that of the zeolite separation membrane obtained in Comparative Example 2.

Thus, Example 1, Comparative Example 1, Example 2 and Comparative Example 2 demonstrate that use of the zeolite separation membrane of the invention makes it possible to accomplish satisfactory separation of alcohol and water even when the water content relative to alcohol is low.

### Industrial Applicability

The process for production of a zeolite separation membrane according to the invention can be employed to produce separation membranes for separation of organic solvent, particularly alcohol, and water. A zeolite separation membrane obtainable by the production process of the invention is particularly useful for production of high purity alcohols that are required in fields such as semiconductor manufacturing.

## Claims

1. A process for production of a zeolite separation membrane having a porous support composed mainly of alumina and a zeolite layer formed on the surface of, and inside the pores of, the porous support, the process comprising:
a crude product-forming step in which: a silica-attached support in which silica is attached to the surface of, and inside the pores of, the porous support is contacted with a reaction solution containing silicon and aluminum, and the reaction solution is heated to form a crude product of the zeolite separation membrane, and
a crude product-separating step in which the crude product of the zeolite separation membrane is separated from the reaction solution to afford the zeolite separation membrane.

2. The process for production of a zeolite separation membrane according to claim 1, wherein zeolite seed crystals are attached to the surface of, and inside the pores of, the silica-attached support before carrying out the crude product-forming step.

3. The process for production of a zeolite separation membrane according to claim 1 or 2, wherein the silica-attached support is a support obtained by contacting the porous support with a colloidal silica-containing liquid and then drying the porous support.
